# EUROPEAN PATENT SPECIFICATION

(11) **EP 2 040 189 B1**
(45) Date of publication and mention of the grant of the patent: **21.06.2017**
(21) Application number: 08000632.3
(22) Date of filing: 15.01.2008
(51) Int. Cl.: G06F 21/00

(54) **Digital rights management**
Verwaltung digitaler Rechte
Gestion des droits numériques

(30) Priority: 15.01.2007 GB 0700763
(43) Date of publication of application: 25.03.2009
(62) Divisional of application: 08166203.3
(73) Proprietor: Vodafone Group PLC, Newbury Berkshire RG14 2FN (GB)
(72) Inventor: Irwin, James, Newbury Berkshire RG14 2FN (GB)
(74) Representative: Boult Wade Tennant

(56) References cited:
- EP-A2- 1 638 292
- WO-A1-2006/043784
- WO-A2-2004/090658
- US-A1- 2004 158 712
- US-A1- 2004 176 080
- US-A1- 2005 044 391

## Description

### TECHNICAL FIELD

The present invention relates to a method and system for distributing rights objects between a first device and a second device, the rights objects being used to authorise use of a content file.

### BACKGROUND TO THE INVENTION

One well-known type of content protection protocol is Digital Rights Management (DRM). DRM is a technology that allows encrypted digital files (or "content") to be distributed readily to potential users without charge. The encrypted data may be freely, onwardly transmitted by the user receiving the data. However, for any user to be able to make use of the data, that data must be decrypted. To obtain a key to decrypt the data, a licence must be purchased or otherwise obtained from a rights issuer or licence broker.

DRM architecture includes the following functional entities.

Content provider: the content provider is an entity that delivers DRM content such as a song, computer program or mobile telephone ring tone. The content is typically encrypted and cannot be used in the form as received.

DRM content: this is the digital file containing data desired by the user. As indicated above, this can be freely distributed. The content is in encrypted form. Existing Digital Rights Management (DRM) systems encrypt digital Content with a Content Encryption Key (CEK).

DRM agent: a DRM agent embodies a trusted entity in a device such as a mobile telephone or personal computer (PC). This trusted entity is responsible for enforcing permissions and constraints associated with DRM content, controlling access to the DRM content.

Licence or rights object (RO): a rights object is, for example, an XML document expressing permissions and constraints associated with a piece of DRM content. ROs govern how the DRM content may be used. DRM content cannot be used without an associated rights object, and may be only used as specified by the RO. The RO typically includes a key to allow decryption of the relevant encrypted content. In DRM systems that use a CEK for encryption, the CEK is distributed to end devices inside the RO.

Rights issuer (RI): the rights issuer is an entity that assigns permissions and constraints to the DRM content. The RI also generates and distributes rights objects.

User: a user is the human user of DRM content. Users can only access DRM content through a DRM agent present on their device.

Recent DRM schemes allow the construction of domains of devices which permit a limited sharing of content between devices, as might be convenient for a user who possesses more than one DRM enabled device between which he wishes to exchange content freely. The term "domain" refers to a grouping of associated devices and (authenticated) users. Management of domains is governed either by a remote domain server (e.g. OMA, iTunes) or by a (local) domain management device. As evidence of membership of a group, each enabled device stores an appropriate domain key.

The mobile phone has the potential to be the primary content discovery platform both for mobile and non mobile content. The inclusion of high quality displays and PC like browsing capabilities within mobile phones means that users can increasingly use their mobile device to discover, preview and purchase rich multimedia content which may be suitable for consumption on both mobile and non mobile devices. One method by which content can be requested and delivered over the air is defined in the Open Mobile Alliance Download Over the Air (OMA DLOTA) v2.0 standard. US Patent Application 2004/158712 describes proxies for content and license distribution and conversion.

### OMA DLOTA v2.0 Overview

The OMA DLOTAv2 standard defines a content delivery mechanism by which media objects can be downloaded from a network and delivered over the air. Examples of such media objects are images, music/video files and applications. This mechanism provides several benefits over traditional http download mechanisms, these include:
- Capability Negotiation
- User Confirmation (although this can be suppressed)
- Installation Notification
- The ability to pause and resume downloads
- Timed downloads
- License Embedding

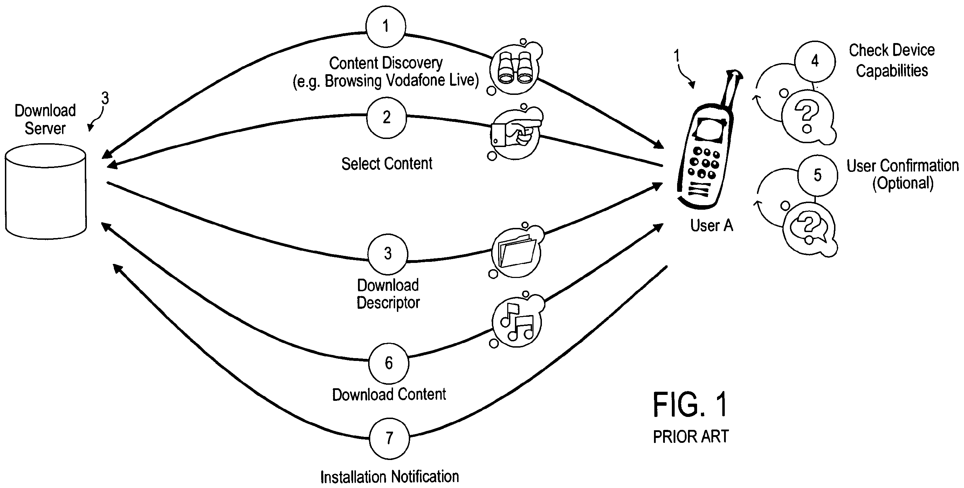

Figure 1, shows the basic operation of OMA DLOTA. The following steps are performed:
1. The user uses their device 1 to browse a download/presentation server 3 that acts as a content provider.
2. The user selects some content using device 1.
3. The server 3 returns a Download Descriptor relating to the content that the user selected. A download descriptor is an XML file that contains metadata relating to the content. For example, the download descriptor contains data defining the required capabilities of the device 1 in order that the content can be rendered etc. In the situation where content is available in a number of different formats, the download descriptor will identify those different formats.
4. The device 1 checks to see that it is capable of supporting the content by comparing its capabilities with those required for the content.
5. If required the device 1 asks the user to confirm the download.
6. The device 1 downloads and installs the content.
7. The device 1 posts an installation notification indicating the success or failure of the content download and installation.

### Downloading Access Restricted Files

Commonly, content providers wish to restrict the rendering or distribution of their content. For example, a subscriber may pay a fixed amount to download a music file and be permitted to play it 10 times. The aforementioned DRM is a standardised mechanism which enables access restriction to be placed on a file, as defined in OMA DRM V2.0. OMA DRM V2.0 describes that a rights object (RO) can be associated with a particular file, where the rights object contains permissions and constraints associated with the protected file. These may, for example, restrict the number of times that a file may be rendered.

A device can only render a rights protected file if it has obtained the required rights object. The process by which the device acquires the rights objects is known as the Rights Object Acquisition Protocol (ROAP). Part of ROAP includes the steps of the device requesting the relevant RO from the rights issuer and the rights issuer providing the relevant RO to the device, where they are then stored. A prompt for initiating the ROAP process is known as a ROAP trigger (defined in OMA DRM v2.0)

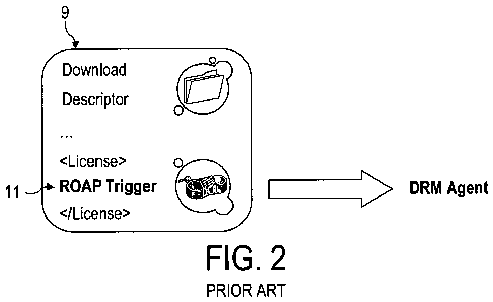

OMA DLOTA facilitates the use of rights objects with downloaded files by embedding an OMA DRM v2.0 ROAP trigger 11 within a download descriptor 5, as shown in Figure 2. This allows a device to retrieve both the content and the associated RO in a single session. This feature can also be combined with the ability to suppress user confirmation so that this retrieval of content and the Rights Object is transparent to the end user.

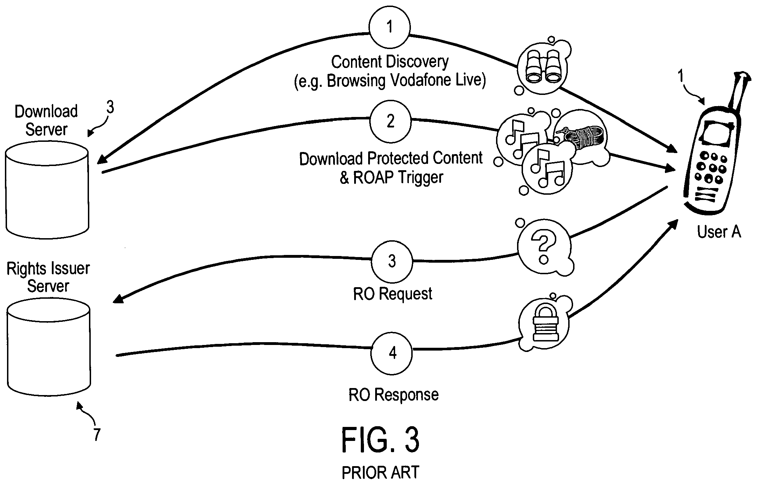

Figure 3 shows the steps taken when a user A uses device 1 to request some content which is rights protected from download server 3.
1. Using a browser or via some other means or device 1 the user performs content discovery. Once the user has selected some content they get a list of offers - e.g. Play once for €0.1 or play indefinitely for €3.
2. After selecting an offer the user is asked to confirm payment. After this confirmation step the content and a ROAP (Rights Object Acquisition Protocol) Trigger 11 is downloaded to the device 1. If the Download Server 3 supports DLOTAv2, the ROAP Trigger may be embedded in a Download Descriptor.
3. The ROAP Trigger provides all the necessary information for the DRM Agent on the device 1 to start a secure ROAP session with the device 1. Assuming the device 1 has already registered with the Rights Issuer 3 the device 1 will send a ROAP:RORequest message to the Rights Issuer Server 7. This message is signed with the DRM Agent's Private Key.
4. Upon reception of a ROAP:RORequest the Rights Issuer (RI) validates the device's signature using its public key (this can be cached at the RI or sent in the ROAP:RORequest message). After validating the device's signature and ensuring the device 1 has not been revoked the Rights Issuer can send a Rights Object back to the device in a ROAP:ROResponse message. The Rights Object contains the consumption rules that define the offer that the user selected in step 1. The ROAP:ROResponse message is signed using the Rights Issuer's Private Key. Upon reception of a ROAP:ROResponse message the DRM Agent validates the RI signature and if this is successful then the DRM Agent installs the Rights Object and can subsequently allow consumption of the content according to the rules specified in the Rights Object.

### Distribution of Downloaded Files Between Devices

Given that there tends to be a one-to-one relationship between users and mobile phones (SIMs) there is the added benefit that the content discovery process and in general the browsing experience can be tailored to address individual preferences. Given its very nature, the mobile phone also represents a good platform for peer to peer recommendations.

Multiple devices can be grouped together in domains and files can be shared between the devices. A single domain can include devices having very different capabilities (rendering profiles) and different types of network connection. For example, a domain may include a PC which is connected to the internet via a broadband link, a mobile telephone and a high definition television.

In order to provide capabilities for content and service discovery for both mobile and non mobile devices there are several barriers to adoption that need to be addressed, these include.
- Device Interoperability Issues
- Capability signalling
- Usability

In both peer to peer content distribution scenarios and those where the mobile is used to acquire content for consumption on other devices one of the key issues to resolve is that of interoperability due to different device capabilities.

Existing download systems include device capability negotiation as part of content discovery and download. However, this has the limitation that the content is only tailored to the device that initially downloads the content. If the content is transferred to other devices then there is a risk that these devices will not be able to render the content or that the device can render the content but the subsequent user experience is non optimal.

Standards initiatives, such as DLNA, group mandatory device capabilities into profiles. By keeping the number of profiles to a minimum and employing a profile hierarchy, where devices that support the most feature rich profile must also support all the lower profiles it is possible to reduce the impact of device incompatibility. However, this approach in isolation does not result in a good user experience. For example, a low resolution, low frame rate, low bit video clip downloaded for a mobile device would not provide a good user viewing experience on a wide screen HD TV having a very different rendering profile.

One known solution is to leverage "composed" content. The term composed content refers to a media file that contains more than one variant of the same content, with each variant being suitable for consumption on devices that support a particular profile. For example, if a domain includes devices with three different capabilities, when a user from the domain requests a piece of content, for example a video clip, he receives a composed file containing three different video clips, one for each of the video profiles of the devices in the domain. However, this results in an increase in the size of the content files and, while this approach works well in a system where the content is downloaded by a device with a high speed broadband internet connection, it is not ideal in a system where the content is initially downloaded by a resource constrained device such as a mobile device since the download time will be unacceptably long.

One other known solution is to embed a Rights Object in a DCF (DRM Content Format) file so that the content and rights can be copied/moved between devices as a single atomic object (as specified in OMA DRM v2). The contentURL which can be used to acquire a version of the content in an appropriate format can be included in the DCF in case the format is not correct. However, the semantics of this URL are defined in a way to suggest that the user should manually select the most appropriate version of the content since the OMA DRM v2.0 specifications define that this URL should be opened by a browser, i.e. there is no automatic user transparent mechanism that can be leveraged. When the DCF is received by a second device the user is notified. The user then manually opens the browser on the second device and, using the URL, obtains and views a list of available versions of the content. The user then manually selects one version of the content from this list that the user believes is most appropriate for the capabilities of the second device.

Conventionally a piece of content is downloaded to the first device as a result of it receiving a download descriptor. After performing all the necessary checks the first device downloads the content (in this case the DCF) and any associated Rights Objects (this occurs whenever a ROAP Trigger is embedded in the download descriptor). Once these steps have taken place the download descriptor is conventionally discarded. To enable onward distribution of the content to other devices that belong to the same domain the OMA specifications allow the Rights Object to be embedded within the DCF.

The present inventors have appreciated that it is beneficial to be able to distribute content among devices with different capabilities. However, the form of content which is optimal for one device will not be optimal for other devices. An object of embodiments of the invention is to provide an improved arrangement for distributing content between devices.

### SUMMARY OF THE INVENTION

According to a first aspect of the present invention, there is provided a method for distributing rights objects between a first device and a second device, the rights objects being used to authorise use of a content file, comprising the steps of:
at the first device:
   selecting and requesting content from a distribution server;
   receiving a download descriptor file for the requested content, the download descriptor file identifying at least one available format of the content and identifying from where the content may be retrieved, wherein different formats of the content are suitable for devices having different rendering profiles and different formats of the content are contained within different content files;
   receiving at least one rights object associated with the content files, the at least one rights object providing authorisation rights for the content files; and
   embedding the at least one rights object within the download descriptor file; and,
distributing the download descriptor file to the second device.

Embedding the rights object within the download descriptor file and distributing the download descriptor file to the second device may provide an efficient mechanism for enabling the second device to obtain content in an appropriate format for that device and for enabling the second device to be authorized to render the content.

In the embodiments the second device performs the steps of automatically identifying an available format of the content appropriate to its rendering profile from the download descriptor, and retrieving the content file containing the appropriate format of the content and using the rights object to render the retrieved content file without requiring user interaction.

In the embodiments the first device performs the step of requesting at least one rights object from the distribution server, this step being performed automatically after receiving the download descriptor file for the content.

The step of requesting at least one rights object may be initiated by an OMA ROAP trigger.

The identification of where the content may be retrieved from may be by a URL.

The download descriptor file is preferably stored on the first device.

The second device may have a different rendering profile from the first device but in the embodiments, the received download descriptor file allows the content in an appropriate format to be obtained and rendered by the second device.

Advantageously, the second device performs the step of retrieving the content automatically when it receives the download descriptor from the first device.

The download descriptor may comprise an XML file.

The download descriptor may support multiple DRM systems.

The present invention also provides a system for distributing rights objects between a first device and a second device.

Embodiments of the present invention overcome these problems by defining a download descriptor which includes rights object(s) for multiple formats of the content along with an indication of where the content is available, for example a URL address. The download descriptor identifies the available formats of the content. The download descriptor is provided to a device during the content acquisition stage and stored on the device. When the content is to be rendered on a different device, the download descriptor is transmitted between devices.

This is in contrast to the conventional arrangement where the download descriptor is discarded by the first device after that device downloads the content and any associated rights objects. The receiving device is able to select the format of the content which is most appropriate for its capabilities and, since it has also received the required rights object and information indicating from where the content can be downloaded, it is able to request and obtain the content immediately from the download server automatically without any user input.

Embodiments of the invention facilitate easy distribution of rights, since the download descriptors are small files, and enable the devices to which the rights have been distributed to obtain the content in a format most suitable to them. In preferred embodiments, the suitable content can be obtained automatically by the receiving device without user interaction.

### BRIEF DESCRIPTION OF THE DRAWINGS

For a better understanding of the invention, embodiments will now be described with reference to the accompanying drawings:
Figure 1 shows the known OMA DLOTAv2 mechanism by which content can be delivered to a device over the air from a network;
Figure 2 shows a known download descriptor in accordance with OMA DLOTAv2.0 with an embedded ROAP trigger
Figure 3 shows the known steps taken when a user requests content which is rights protected;
Figure 4 shows a download descriptor having a licence embedded therein in accordance with an embodiment of the invention;
Figure 5 shows the steps taken in accordance with an embodiment of the invention by which a protected rights object is embedded in a download descriptor;
Figure 6 shows a download descriptor in accordance with an embodiment of the invention with a format that supports multiple DRM systems;
Figure 7 shows the XML for a download descriptor in accordance with the invention, showing respective environment elements;
Figure 8 shows the steps taken in accordance with an embodiment of the invention where a download descriptor is obtained by a first device and a copy is subsequently transferred to a second device but where the first device does not download the associated content;
Figure 9 shows the steps taken in accordance with an embodiment of the invention where a download descriptor is obtained by a first device and a copy is subsequently transferred to a second device but where the first device does download the associated content; and
Figure 10 shows in more detail a DRM Content Format file in accordance with the Figure 9 arrangement.

In the drawings like elements are generally designated with the same reference sign.

### DETAILED DESCRIPTION OF EMBODIMENTS OF THE INVENTION

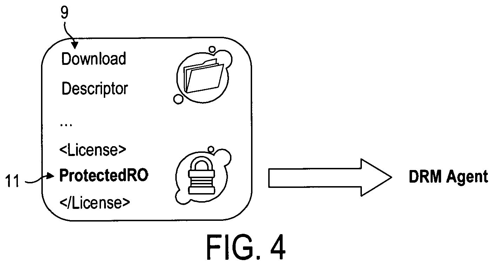

Embodiments of the invention build on the extensible features of OMA DLOTAv2.0. In particular embodiments of the invention make use of the ability to embed a license element within a Download Descriptor 9 that is transmitted between devices. Within the OMA DLOTAv2.0 specifications the license element is used to embed in the download descriptor 9 an OMA DRM v2.0 ROAP Trigger, and this is reused as a means for the device 1 to acquire the Rights Object 13, as shown below in Figure 4.

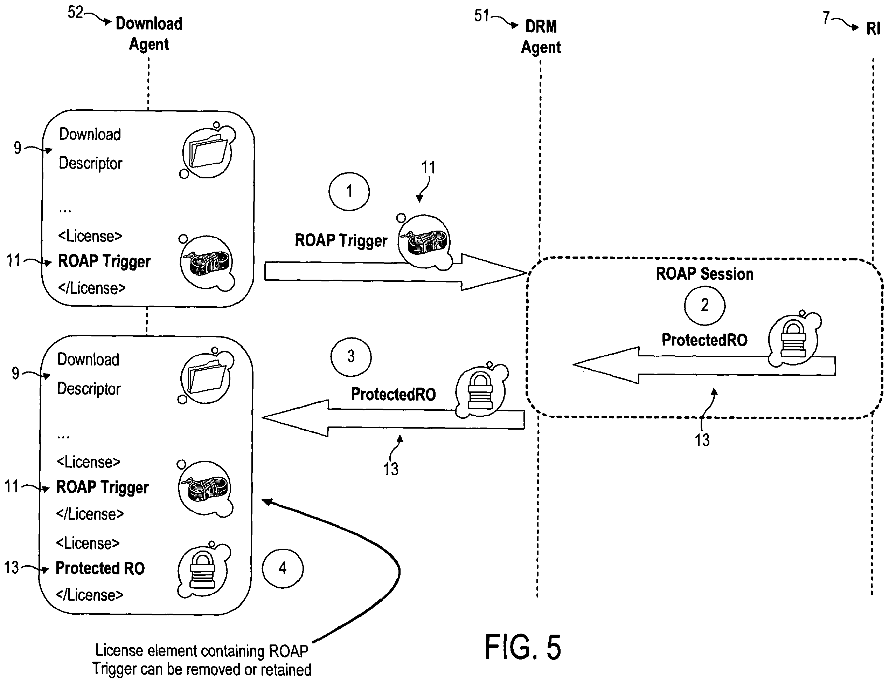

In order to associate a Rights Object 13 with the content that it controls and provide a means for a device to acquire a suitable version of the content, the Download Descriptor is persistently stored on the device 1 rather than being discarded (which is normally the case). When the device 1 has acquired the Rights Object 13 this can be embedded in the Download Descriptor 9 as shown in Figure 5 by leveraging the Licence element.

In Figure 5 the following steps are performed:
1. The download agent 52 of the device 1 sends the ROAP trigger 11 from the download descriptor 9 to the DRM agent 51 of the device 1. The DRM agent 51 forwards the ROAP trigger 11 to the rights issuer 7.
2. A ROAP session is then performed which causes the rights issuer 7 to issue a protected rights object 13. The rights object 13 is transmitted to the DRM agent 51.
3. The protected rights object 13 is transmitted from the DRM agent 51 to the download agent 52. The download agent 52 modifies the download descriptor to include the protected rights object 13.

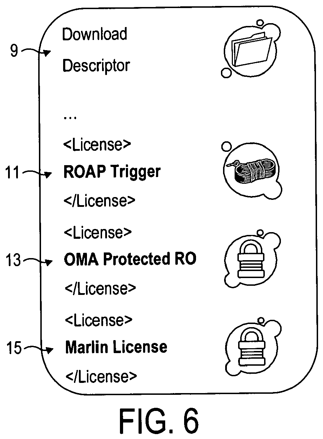

Embodiments of the invention also allow Multiple DRM systems such as Marlin. To cater for this case the Download Descriptor 9 can contain multiple license elements, thereby carrying the DRM specific licence trigger or the license itself for each DRM system as appropriate. Figure 6 shows how the extensible nature of the Download Descriptor 9 can used to enable consumption on both OMA and Marlin devices. In this scenario the Download Descriptor contains:
1. A license element containing the OMA ROAP Trigger 11
2. A license element contain the OMA Protected RO 13
3. A licence element containing a Marlin License Object 15

In order to cater for the different profiles/capabilities that devices support, the DLOTAv2.0 environment element can be used to define the various URLs to be used in order to acquire a variant of the content that is suitable for the profile that the device supports. The advantage of using the environment element in this way is that the semantics of the content of the environment element can be defined by the appropriate Standards body.

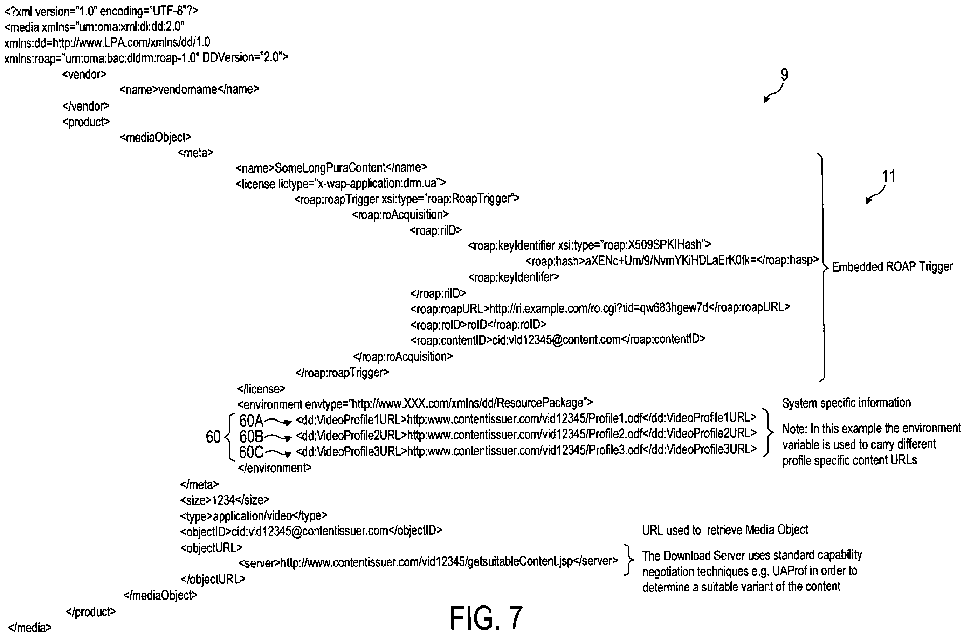

A Download Descriptor containing an example environment element is shown in Figure 7.

The environment element 60 within the Download Descriptor 9 allows the embedding of additional information specific to a download mechanism, e.g. Java MIDP. According to the DLOTA Specification, describing the environment variable:
"This element wraps the environment specific meta information described by namespace qualified XML elements. The envtype value unambiguously identifies the information set that can be included inside the environment element and the content handler of the Media Object. If the content handler is unknown then the client SHOULD abort the download transaction and post the "Envtype Not Supported" (959) status report if the installNotifyURI element is present in the Download Descriptor. The possible values of envtype, syntax and semantics of the internal meta data structures depend on separate environment specific standards. If the device supports MIDP content then the device MUST support the environment element and the processing of the environment element as defined in section 10. If the device does not support MIDP the device MAY support the environment element."

The "envType" unambiguously defines the semantics for the information embedded with the element 60. In an embodiment a new envType (which is basically a URI) is defined and could be registered with the relevant Standards Body. Once registered and defined a device implementer will know the semantics of the environment element and how the contents of the environment element should be used. In the example in Figure 7, three sub elements 60A, 60B and 60C are defined, each one corresponding to a different profile and each one providing a URL to the content in a format that is suitable for a device that supports/implements a specific profile. Given that a device must implement/support at least one of these profiles it can then automatically decide which URL to use to obtain the content in a suitable format, without requiring user interaction.

These profiles define the media rendering capabilities of the device e.g. the maximum resolution it supports, audio and video codecs supported etc. Within the download server 3, content is then encoded/formatted for each of these profiles and made available on the internet.

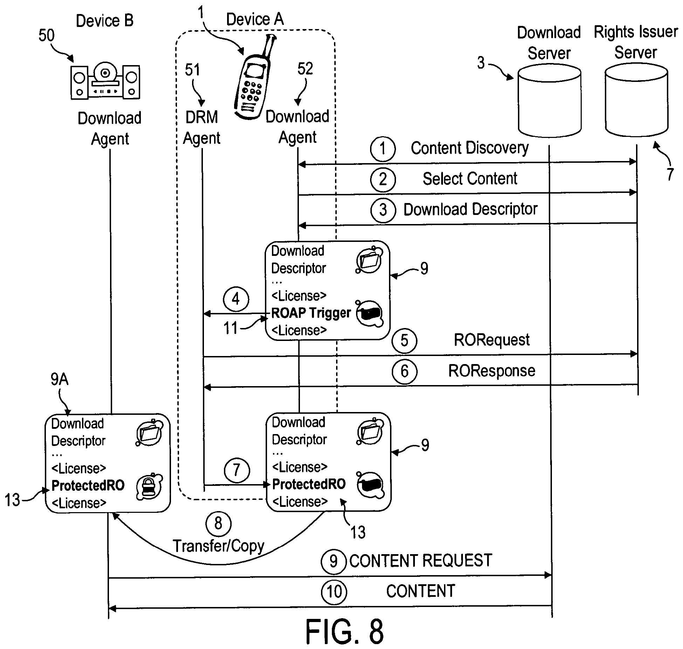

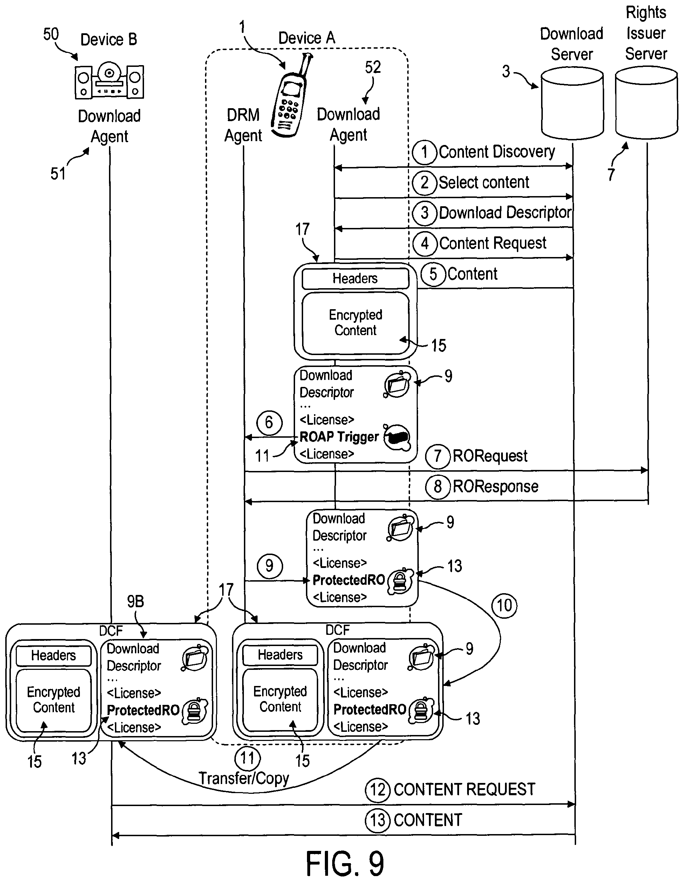

The selection of content by a first device 1 will now be described. The user of the first device 1 can choose whether or not to download the content. If they choose not to, then the Rights Object is acquired but the Media Object is not downloaded (as shown in Figure 8). If they choose to download the content the Media Object is downloaded as usual following the existing DLOTA specification (as shown in Figure 9).

Figure 8 shows the situation where a device 1 wishes to select some content to be rendered at a later time and, perhaps, on a different device 50 within the same domain. The device 1 initially discovers (step 1) and selects (step 2) some content on a download server 3. The download server 3 responds to the content request by transmitting the download descriptor 9 (step 3) for the content, the download descriptor including details of the available formats of the content and a ROAP trigger 11. The Download Agent 52 in the device 1 passes the ROAP Trigger 11 (step 4) to the DRM Agent 51. At this stage the DRM Agent 51 in the device makes a request (step 5) for the rights objects associated with the content from the rights issuer server 7. The rights issuer server 7 then transmits a ROResponse (step 6) which includes the rights objects (in the form of a ProtectedRO 13) required for all formats of the content according to the different profiles. The device 1 (this can be either the DRM Agent 52 or the Download Agent 54) then embeds the ProtectedRO 13 in the already downloaded Download Descriptor 9 (step 7) and the download descriptor 9 is persistently stored on the device 1.

At a later time if the user wishes to render the content on a different device 50 (which belongs to the same domain) he can transfer or copy (step 8) the download descriptor 9A to the different device 50. On receiving the download descriptor 9A, the device 50 is able to identify which format of the content is most suitable for the device 50 by matching the device 50 profile type to one of the profile types in the download descriptor 9A and, since the Download Descriptor 9A already contains the required rights object 13 for the device 50, the device 50 is able to contact the download server 3 directly and request (step 9) the content in the most appropriate format without requiring user interaction. The download server 3 can then respond with the content (step 10)

Such embodiments provide the facility for a user of device 1 to mark content for download and to handle the authorisation and payment steps but to postpone the actual download until some time in the future, with the option for the download to occur via some other device (e.g. device 50). Thus the user of device 1 acquires the rights at the time of content discovery and purchase. This provides a simple architecture and is aligned with the user perception that they have purchased the rights to content. A typical example of use of the embodiment would be for a user to search for content on his mobile phone while he is traveling home from work and which he wants to view on his High Definition (HD) television at home. During his journey he is able to select and purchase the content, during which the download descriptor is downloaded and stored on his mobile phone, and, on returning home, he is able to transfer the download descriptor to the HD television and the HD television is able to obtain the HD suitable content. In preferred embodiments, the HD television will obtain the suitable content without further interaction from the user.

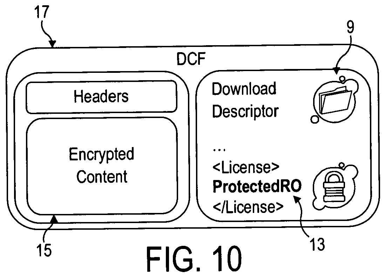

Figure 9 shows the situation when the content is acquired by the initial device 1, as well as the download descriptor 9. The device 1 initially discovers (step 1) and selects (step 2) some content on a download server 3. The download server 3 responds to the content request by transmitting the download descriptor 9 (step 3) for the content, the download descriptor 9 including details of the available formats of the content and a ROAP trigger 11. The Download Agent 52 requests (step 4) the content using the appropriate URL within the Download Descriptor 9. The download server 7 can then respond with the content 15 in a DCF 17 (step 5). The Download Agent 52 passes the ROAP Trigger 11 (step 6) to the DRM Agent 51. At this stage the DRM Agent 51 makes a request (step 7) to the rights issuer server 7 for the rights objects associated with the content. The rights issuer server 7 then transmits a ROResponse (step 8) which includes the rights objects (in the form of a ProtectedRO 13) required for all formats of the content. The device 1 (this can be either the DRM Agent 51 or the Download Agent 52) then embeds the ProtectedRO 13 in the already downloaded Download Descriptor 9 (step 9) and the download descriptor 9 can further be embedded within the DCF 17 (step 10). The resultant DCF 17 is shown more clearly in Figure 10. At a later time if the user wishes to render the content on a different device 50 (which belongs to the same domain) he can transfer or copy (step 11) the download descriptor 9 to the different device. On receiving the download descriptor, the device 50 is able to identify which format of the content is most suitable for the device 50 by matching the device 50 profile type to one of the profile types in the download descriptor 9A and, since the Download Descriptor 9 already contains the required rights object 13 for the device 50, the device 50 is able to contact the download server 3 directly and request (step 12) the content in the most appropriate format. The download server 3 can then respond with the content (step 13).

In preferred embodiments of figure 9, the user may be given the option to select whether to transfer the Download Descriptor 9 and content 15 or just the Download Descriptor 9. This is particularly useful if the user is aware of whether the two devices 1 and 50 have similar capabilities. For example, if the content is being transferred between similar mobile phones he may wish to send the content 15 and the Download Descriptor 9 but if transferring from a mobile phone to a HD television, he may wish to send the Download Descriptor 9 only. In any case if the user is unaware of the capabilities of the target device 50 he can simply move the content 15 and the target device 50 will be able to retrieve the content in the most appropriate format.

## Claims

1. A method for distributing rights objects between a first device and a second device, the rights objects being used to authorise use of a content file, comprising the steps of:
at the first device:
selecting and requesting content from a distribution server;
receiving a download descriptor file for the requested content, the download descriptor file identifying a plurality of available formats of the content and identifying from where each of the content formats may be retrieved, wherein different formats of the content are suitable for devices having different rendering profiles and different formats of the content are contained within different content files;
receiving at least one rights object associated with the content files, the at least one rights object providing authorisation rights for the content files; and
embedding the at least one rights object within the download descriptor file; and,
distributing the download descriptor file to the second device.

2. A method according to claim 1 wherein the second device performs the steps of identifying an available format of the content appropriate to its rendering profile from the download descriptor, retrieving the content file containing the appropriate format of the content and using the rights object to render the retrieved content file.

3. A method according to claim 1 or 2 wherein the first device performs the step of requesting at least one rights object from the distribution server, this step being performed automatically after receiving the download descriptor file for the content.

4. A method according to claim 3 wherein the step of requesting at least one rights object is initiated by an OMA ROAP trigger.

5. A method according to claim 1, 2, 3 or 4 wherein the identification of where the content may be retrieved from is a URL.

6. A method according to any of claims 1 to 5 comprising the further step of storing the download descriptor file on the first device.

7. A method according to claim 1, 2, 3, 4, 5 or 6 wherein the second device has a different rendering profile from the first device.

8. A method according to any of claims 2 to 7 wherein the second device performs the step of retrieving the content automatically when it receives the download descriptor from the first device.

9. A method according to any of claims 1 to 8 wherein the download descriptor comprises an XML file.

10. A method according to any of claims 1 to 9 wherein the download descriptor supports multiple DRM systems.

11. A system for distributing rights objects between a first device and a second device, the rights objects being used to authorise use of a content file, the system comprising:
the first device comprising:
means for selecting and means for requesting content from a distribution server;
means for receiving a download descriptor file for the requested content, the download descriptor file identifying a plurality of available formats of the content and identifying where each of the content formats may be retrieved, wherein different formats of the content are suitable for devices having different rendering profiles and different formats of the content are contained within different content files;
means for receiving at least one rights object associated with the content files, the at least one rights object providing authorisation rights for the content file;
means for embedding the at least one rights object within the download descriptor file; and,
means for distributing the download descriptor file to the second device.

12. A system according to claim 11 wherein the second device comprises means for identifying an available format of the content appropriate to its rendering profile from the download descriptor, means for retrieving the content file containing the appropriate format of the content and means for using the rights object to render the retrieved content file.

13. A system according to claim 11 or 12 the first device further comprising means for requesting at least one rights object from the distribution server, this request being performed automatically after receiving the download descriptor file for the content.

14. A system according to claim 13 wherein request for at least one rights object is initiated by an OMA ROAP trigger.

15. A system according to claim 11, 12, 13 or 14 wherein the identification of where the content may be retrieved from is a URL.

16. A system according to any of claims 11 to 15 further comprising means for storing the download descriptor file on the first device.

17. A system according to any of claims 11 to 16 wherein the second device has a different rendering profile from the first device.

18. A system according to any of claims 12 to 17 wherein the second device comprises means for retrieving the content automatically when it receives the download descriptor from the first device.

19. A system according to any of claims 11 to 18 wherein the download descriptor comprises an XML file.

20. A system according to any of claims 11 to 19 wherein the download descriptor supports multiple DRM systems.

## Patentansprüche

1. Verfahren zum Verteilen von Rechteobjekten zwischen einem ersten Gerät und einem zweiten Gerät, wobei die Rechteobjekte zum Autorisieren der Benutzung einer Inhaltsdatei benutzt werden, das die folgenden Schritte beinhaltet:
am ersten Gerät:
Auswählen und Anfordern von Inhalt von einem Verteilungsserver;
Empfangen einer Download-Deskriptordatei für den angeforderten Inhalt, wobei die Download-Deskriptordatei mehrere verfügbare Formate des Inhalts identifiziert, und Identifizieren, von wo jedes der Inhaltsformate abgerufen werden kann, wobei unterschiedliche Formate des Inhalts für Geräte mit unterschiedlichen Rendering-Profilen geeignet sind und unterschiedliche Formate des Inhalts in unterschiedlichen Inhaltsdateien enthalten sind;
Empfangen wenigstens eines mit den Inhaltsdateien assoziierten Rechteobjekts, wobei das wenigstens eine Rechteobjekt Autorisierungsrechte für die Inhaltsdateien bereitstellt; und
Einbetten des wenigstens einen Rechteobjekts in der Download-Deskriptordatei; und
Verteilen der Download-Deskriptordatei zu dem zweiten Gerät.

2. Verfahren nach Anspruch 1, wobei das zweite Gerät die Schritte des Identifizierens eines verfügbaren Formats des für sein Rendering-Profil geeigneten Inhalts von dem Download-Deskriptor, Abrufen der das geeignete Format des Inhalts enthaltenden Inhaltsdatei und Benutzen des Rechteobjekts zum Rendern der abgerufenen Inhaltsdatei durchführt.

3. Verfahren nach Anspruch 1 oder 2, wobei das erste Gerät den Schritt des Anforderns wenigstens eines Rechteobjekts von dem Inhaltsserver ausführt, wobei dieser Schritt automatisch nach dem Empfang der Download-Deskriptordatei für den Inhalt ausgeführt wird.

4. Verfahren nach Anspruch 3, wobei der Schritt des Anforderns wenigstens eines Rechteobjekts von einem OMA ROAP Trigger eingeleitet wird.

5. Verfahren nach Anspruch 1, 2, 3 oder 4, wobei die Identifikation, wo der Inhalt abgerufen werden kann, ein URL ist.

6. Verfahren nach einem der Ansprüche 1 bis 5, das den weiteren Schritt des Speicherns der Download-Deskriptordatei auf dem ersten Gerät beinhaltet.

7. Verfahren nach Anspruch 1, 2, 3, 4, 5 oder 6, wobei das zweite Gerät ein anderes Rendering-Profil hat als das erste Gerät.

8. Verfahren nach einem der Ansprüche 2 bis 7, wobei das zweite Gerät den Schritt des automatischen Abrufens des Inhalts ausführt, wenn es den Download-Deskriptor vom ersten Gerät erhält.

9. Verfahren nach einem der Ansprüche 1 bis 8, wobei der Download-Deskriptor eine XML-Datei umfasst.

10. Verfahren nach einem der Ansprüche 1 bis 9, wobei der Download-Deskriptor mehrere DRM-Systeme unterstützt.

11. System zum Verteilen von Rechteobjekten zwischen einem ersten Gerät und einem zweiten Gerät, wobei die Rechteobjekte zum Autorisieren der Benutzung einer Inhaltsdatei benutzt werden, wobei das System Folgendes umfasst:
wobei das erste Gerät Folgendes umfasst:
Mittel zum Auswählen und Mittel zum Anfordern von Inhalt von einem Verteilungsserver;
Mittel zum Empfangen einer Download-Deskriptordatei für den angeforderten Inhalt, wobei die Download-Deskriptordatei mehrere verfügbare Formate des Inhalts identifiziert, und Identifizieren, von wo jedes der Inhaltsformate abgerufen werden kann, wobei unterschiedliche Formate des Inhalts für Geräte mit unterschiedlichen Rendering-Profilen geeignet sind und unterschiedliche Formate des Inhalts in unterschiedlichen Inhaltsdateien enthalten sind;
Mittel zum Empfangen wenigstens eines mit den Inhaltsdateien assoziierten Rechteobjekts, wobei das wenigstens eine Rechteobjekt Autorisierungsrechte für die Inhaltsdatei bereitstellt;
Mittel zum Einbetten des wenigstens einen Rechteobjekts in der Download-Deskriptordatei; und
Mittel zum Verteilen der Download-Deskriptordatei an das zweite Gerät.

12. System nach Anspruch 11, wobei das zweite Gerät Mittel zum Identifizieren eines verfügbaren Formats des für sein Rendering-Profil geeigneten Inhalts von dem Download-Deskriptor, Mittel zum Abrufen der das geeignete Format des Inhalts enthaltenden Inhaltsdatei und Mittel zum Benutzen des Rechteobjekts zum Rendern der abgerufenen Inhaltsdatei umfasst.

13. System nach Anspruch 11 oder 12, wobei das erste Gerät ferner Mittel zum Anfordern wenigstens eines Rechteobjekts von dem Verteilungsserver umfasst, wobei diese Anforderung automatisch nach dem Erhalt der Download-Deskriptordatei für den Inhalt ausgeführt wird.

14. System nach Anspruch 13, wobei die Anforderung für wenigstens ein Rechteobjekt von einem OMA ROAP Trigger eingeleitet wird.

15. System nach Anspruch 11, 12, 13 oder 14, wobei die Identifikation, von wo der Inhalt abgerufen werden kann, ein URL ist.

16. System nach einem der Ansprüche 11 bis 15, das ferner Mittel zum Speichern der Download-Deskriptordatei auf dem ersten Gerät umfasst.

17. System nach einem der Ansprüche 11 bis 16, wobei das zweite Gerät ein anderes Rendering-Profil hat als das erste Gerät.

18. System nach einem der Ansprüche 12 bis 17, wobei das zweite Gerät Mittel zum automatischen Abrufen des Inhalts umfasst, wenn es den Download-Deskriptor vom ersten Gerät erhält.

19. System nach einem der Ansprüche 11 bis 18, wobei der Download-Deskriptor eine XML-Datei umfasst.

20. System nach einem der Ansprüche 11 bis 19, wobei der Download-Deskriptor mehrere DRM-Systeme unterstützt.

## Revendications

1. Procédé de distribution d'objets de droits entre un premier dispositif et un second dispositif, les objets de droits servant à autoriser l'utilisation d'un fichier de contenu, comprenant les étapes consistant à :
au niveau du premier dispositif :
sélectionner et requérir un contenu auprès d'un serveur de distribution ;
recevoir un fichier descripteur de déchargement pour le contenu requis, le fichier descripteur de déchargement identifiant une pluralité de formats possibles du contenu et identifiant l'endroit à partir duquel chacun des formats de contenu peut être recouvré, dans lequel différents formats du contenu conviennent à des dispositifs ayant différents profils de rendu et différents formats du contenu sont contenus dans différents fichiers de contenu ;
recevoir au moins un objet de droits associé aux fichiers de contenu, l'au moins un objet de droits fournissant des droits d'autorisation aux fichiers de contenu ; et
insérer l'au moins un objet de droits dans le fichier descripteur de déchargement ; et,
distribuer le fichier descripteur de déchargement au second dispositif.

2. Procédé selon la revendication 1 dans lequel le second dispositif exécute les étapes consistant à identifier un format possible du contenu convenant à son profil de rendu à partir du descripteur de déchargement, recouvrer le fichier de contenu contenant le format convenable du contenu et utiliser l'objet de droits pour rendre le fichier de contenu recouvré.

3. Procédé selon la revendication 1 ou 2 dans lequel le premier dispositif exécute l'étape de requête d'au moins un objet de droits auprès du serveur de distribution, cette étape étant exécutée automatiquement après la réception du fichier descripteur de déchargement du contenu.

4. Procédé selon la revendication 3 dans lequel l'étape de requête d'au moins un objet de droits est lancée par un déclencheur OMA ROAP.

5. Procédé selon la revendication 1, 2, 3 ou 4 dans lequel l'identification de l'endroit à partir duquel le contenu peut être recouvré est une adresse URL.

6. Procédé selon l'une quelconque des revendications 1 à 5 comprenant l'étape supplémentaire consistant à mémoriser le fichier descripteur de déchargement sur le premier dispositif.

7. Procédé selon la revendication 1, 2, 3, 4, 5 ou 6 dans lequel le second dispositif a un profil de rendu différent de celui du premier dispositif.

8. Procédé selon l'une quelconque des revendications 2 à 7 dans lequel le second dispositif exécute 1"étape de recouvrement du contenu automatiquement quand il reçoit le descripteur de déchargement depuis le premier dispositif.

9. Procédé selon l'une quelconque des revendications 1 à 8 dans lequel le descripteur de déchargement comprend un fichier XML.

10. Procédé selon l'une quelconque des revendications 1 à 9 dans lequel le descripteur de déchargement prend en charge de multiples systèmes DRM.

11. Système de distribution d'objets de droits entre un premier dispositif et un second dispositif, les objets de droits servant à autoriser l'utilisation d'un fichier de contenu, le système comprenant :
le premier dispositif comprenant :
un moyen de sélection et un moyen de requête d'un contenu auprès d'un serveur de distribution ;
un moyen de réception d'un fichier descripteur de déchargement pour le contenu requis, le fichier descripteur de déchargement identifiant une pluralité de formats possibles du contenu et identifiant à partir de quel endroit chacun des formats de contenu peut être recouvré, dans lequel différents formats du contenu conviennent à des dispositifs ayant différents profils de rendu et différents formats du contenu sont contenus dans différents fichiers de contenu ;
un moyen de réception d'au moins un objet de droits associé aux fichiers de contenu, l'au moins un objet de droits fournissant des droits d'autorisation aux fichiers de contenu ; et
un moyen d'insertion de l'au moins un objet de droits dans le fichier descripteur de déchargement ; et,
un moyen de distribution du fichier descripteur de déchargement au second dispositif.

12. Système selon la revendication 11 dans lequel le second dispositif comprend un moyen d'identification d'un format possible du contenu convenant à son profil de rendu à partir du descripteur de déchargement, un moyen de recouvrement du fichier de contenu contenant le format convenable du contenu et un moyen d'utilisation de l'objet de droits pour rendre le fichier de contenu recouvré.

13. Système selon la revendication 11 ou 12 le premier dispositif comprenant en outre un moyen de requête d'au moins un objet de droits auprès du serveur de distribution, la requête étant exécutée automatiquement après la réception du fichier descripteur de déchargement du contenu.

14. Système selon la revendication 13 dans lequel la requête d'au moins un objet de droits est lancée par un déclencheur OMA ROAP.

15. Système selon l'une quelconque des revendications 11, 12, 13 ou 14 dans lequel l'identification de l'endroit à partir duquel le contenu peut être recouvré est une adresse URL.

16. Système selon l'une quelconque des revendications 11 à 15 comprenant en outre un moyen de mémorisation du fichier descripteur de déchargement sur le premier dispositif.

17. Système selon l'une quelconque des revendications 11 à 16 dans lequel le second dispositif a un profil de rendu différent de celui du premier dispositif.

18. Système selon l'une quelconque des revendications 12 à 17 dans lequel le second dispositif comprend un moyen de recouvrement du contenu automatiquement quand il reçoit le descripteur de déchargement depuis le premier dispositif.

19. Système selon l'une quelconque des revendications 11 à 18 dans lequel le descripteur de déchargement comprend un fichier XML.

20. Système selon l'une quelconque des revendications 11 à 19 dans lequel le descripteur de déchargement prend en charge de multiples systèmes DRM.
